# EUROPEAN PATENT APPLICATION

(11) **EP 4 421 922 A1**
(43) Date of publication of application: **28.08.2024**
(21) Application number: 22901691.0
(22) Date of filing: 25.11.2022
(51) Int. Cl.: H01M 4/92, H01M 4/90, H01M 8/10

(54) **FUEL CELL CATALYST, METHOD FOR MANUFACTURING SAME, AND FUEL CELL COMPRISING SAME**

(30) Priority: 03.12.2021 KR 20210171423
(71) Applicant: Kolon Industries, Inc., Seoul 07793 (KR)
(72) Inventor: KIM, Jung Ho, Seoul 07793 (KR); KIM, Jun Young, Seoul 07793 (KR); SONG, Kah Young, Seoul 07793 (KR); KONG, Nak Won, Seoul 07793 (KR); LEE, Eun Su, Seoul 07793 (KR); KIM, Hyeong Su, Seoul 07793 (KR); LEE, Ju Sung, Seoul 07793 (KR); NAM, Kyoung Sik, Seoul 07793 (KR); PARK, Chan Mi, Seoul 07793 (KR)
(74) Representative: Ter Meer Steinmeister & Partner
(86) International application number: PCT/KR2022/018883
(87) International publication number: WO 2023/101333

(57) **Abstract**

The present disclosure relates to: a fuel cell catalyst comprising a support having pores, first metal catalyst particles located in the interior of the pores of the support, and second metal catalyst particles located in the exterior of the pores of the support; a method for manufacturing same; and a membrane-electrode assembly comprising same.

## Description

### [TECHNICAL FIELD]

The present disclosure relates to a fuel cell catalyst having effects of excellent battery performance and improved durability by allowing metal catalyst particles to be present at a specific ratio in both of the inside and outside of a porous support, a method for preparing the same, and a fuel cell including the same.

### [BACKGROUND ART]

Fuel cells are batteries that directly convert chemical energy generated by oxidation of fuel into electrical energy, and are in the limelight as a next-generation energy source due to their high energy efficiency and eco-friendly characteristics with low pollutant emissions.

The fuel cells generally have a structure in which an anode and a cathode are formed on both sides of the electrolyte membrane in a state in which an electrolyte membrane is placed therebetween, and such a structure is called a membrane-electrode assembly (MEA).

The fuel cells may be classified into alkaline electrolyte fuel cells, polymer electrolyte membrane fuel cells (PEMFC), etc., depending on the type of an electrolyte membrane, and the polymer electrolyte membrane fuel cells among them are in the limelight as portable, automotive, and home power supply devices due to their advantages such as a low operating temperature of less than 100°C, fast start-up and response characteristics, excellent durability, etc.

Typical examples of such polymer electrolyte membrane fuel cells may include a proton exchange membrane fuel cell (PEMFC), which uses hydrogen gas as fuel, and the like.

To summarize the reactions that occur in a polymer electrolyte membrane fuel cell, first, when fuel such as hydrogen gas is supplied to the anode, hydrogen ions (H⁺) and electrons (e⁻) are generated at the anode by an oxidation reaction of hydrogen. The generated hydrogen ions (H⁺) are transferred to the cathode through the polymer electrolyte membrane, and the generated electrons (e⁻) are transferred to the cathode through an external circuit. Oxygen is supplied from the cathode, and oxygen is bonded to hydrogen ions (H⁺) and electrons (e⁻) to produce water by a reduction reaction of oxygen.

Platinum or other precious metals with high catalytic activity and high corrosion resistance are used as metal catalysts for forming electrodes of membrane-electrode assemblies (MEAs).

Since platinum and other precious metals used as fuel cell catalysts are expensive to increase the manufacturing cost of fuel cells, research is being continuously conducted on technologies that can lower the manufacturing cost of fuel cells by reducing the amount of metal catalysts used while maintaining cell performance.

As a technology to reduce the amount of a catalyst used by increasing the active surface area of the catalyst, a catalyst formed by dispersing metal catalyst particles on the surface of an electrically conductive support (e.g. carbon, metal oxide, C₃N₄, etc.) has been developed.

Korean Patent Publication No. 2021-0006991 relates to an electrode catalyst of a fuel cell, and discloses an electrode catalyst composed of a core portion and a shell portion by supporting different metal catalyst particles in the inside and outside of a porous support.

The above-mentioned patent discloses an electrode catalyst in which 80% or more of metal catalyst particles are supported in the inside of the mesopores of a support with improved catalytic activity, but does not disclose a fuel cell catalyst having the effect of improving durability without deteriorating the performance of a fuel cell by optimizing the ratio, size, etc. of the inner and outer metal catalyst particles for each type of the support.

In particular, when fuel cells are operated for a long period of time, the high voltage and highly acidic environment cause migration and/or oxidation of the metal catalyst from the nanoparticles, thereby accelerating catalyst degradation. Therefore, preventing catalyst deterioration according to long-term operation of the fuel cells is very important in improving the durability and lifespan of the fuel cells.

Therefore, in order to improve the performance and service life of the fuel cells, research on catalysts for fuel cells with excellent performance and durability is continuing.

### [Related Art Document]

(Patent Document 0001) Korean Patent Publication No. 2021-0006991 (2021.01.19)

### [DETAILED DESCRIPTION OF INVENTION]

### [TECHNICAL PROBLEMS]

An object of the present disclosure is to provide a fuel cell catalyst with excellent performance and durability through adjustment of the metal catalyst particles supported in the inside of the pores of the support, the metal catalyst particles supported in the outside of the support, and their contents.

Another object of the present disclosure is to provide a method for preparing a fuel cell catalyst including metal catalyst particles inside and outside the pores of the support.

According to the present disclosure, it is possible to provide a fuel cell with improved lifespan without deteriorating the performance of a fuel cell compared to existing fuel cell catalysts.

### [TECHNICAL SOLUTION]

According to one aspect of the present disclosure, a fuel cell catalyst including: a support having pores; first metal catalyst particles located inside the pores of the support; and second metal catalyst particles located outside the pores of the support is provided.

The fuel cell catalyst may have a ratio (M1/M2) of the number of first metal catalyst particles (M1) and the number of second metal catalyst particles (M2) of a ratio of 0.25 to 0.67 if the support has a specific surface area of 300 m²/g or more, and a ratio of 0.05 to 0.25 if the support has a specific surface area of less than 300 m²/g.

The first metal catalyst particles and the second metal catalyst particles may be contained at a diameter ratio of 1:1 to 3.

The first metal catalyst particles and the second metal catalyst particles may each independently have an average diameter of 2 to 17 nm.

The support may have a size of 15 to 60 nm.

The support pores may have a size of 2 to 15 nm.

The first metal catalyst particles and the second metal catalyst particles may be each independently selected from the group consisting of Pt, Pt-Pd, Pt-Mn, Pt-Sn, Pt-Mo, Pt-Cr, Pt-W, Pt-Ru, Pt-Ni, Pt-Co, Pt-Y, Pt-Ru-W, Pt-Ru-Ir, Pt-Ru-Ni, Pt-Ru-Mo, Pt-Ru-Rh-Ni, Pt-Ru-Sn-W, Pt-Ru-Ir-Ni, Pt-Ru-Ir-Y, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, and Pt-Cr-Ir.

According to another aspect of the present disclosure, there is provided a method for preparing the above-described fuel cell catalyst, including steps of a) forming a seed of metal catalyst particles from a metal catalyst precursor solution, b) adding a support to the solution, and then infiltrating the seed of the metal catalyst particles into the pores in the support and adsorbing it on the support surface, and c) reducing and growing the seed of the metal catalyst particles in the step b).

The step a) may be making a seed in the form of a partially reduced or hydrated metal ligand from a metal catalyst precursor solution.

The step a) may be performed by mixing at least one additive selected from the group consisting of formaldehyde, formic acid, citric acid, ascorbic acid, urea, and hexamethylenetetramine with a metal catalyst precursor to prepare a metal catalyst precursor solution and heating it.

The step b) may be performed using vacuum infiltration.

In the step b), the metal catalyst precursor solution contains an alcohol-based solvent, and the support may be a pretreated one in which the inside of the pores is hydrophilically modified before performing the step b).

The step c) is performed by adding a reducing agent, and the reducing agent may include one or more selected from the group consisting of formaldehyde, formic acid, ascorbic acid, hexamethylenetetramine, citric acid, and ethylene glycol.

According to another aspect of the present disclosure, a membrane-electrode assembly including the above-described fuel cell catalyst is provided.

According to another aspect of the present disclosure, a fuel cell including the above-described membrane-electrode assembly is provided.

### [EFFECT OF INVENTION]

The fuel cell catalyst according to the present disclosure has the effect of improving durability without deteriorating battery performance by adjusting the loading ratio, particle size, etc. of the metal catalyst inside and outside the support pores through physical methods such as vacuum infiltration after forming a seed of metal catalyst particles.

The fuel cell catalyst according to the present disclosure has the effect of reducing the manufacturing cost of a fuel cell including the fuel cell catalyst due to improved performance and durability.

### [BRIEF DESCRIPTION OF THE DRAWING]

FIG. 1 is images of reconstructing STEM and TEM images of an electrode catalyst for a fuel cell according to one embodiment of the present disclosure.

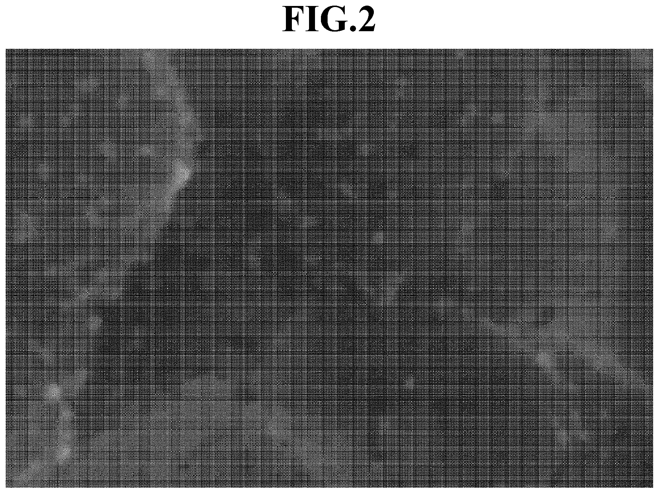

FIG. 2 is an image of reconstructing a STEM image of an electrode catalyst for a fuel cell according to another embodiment of the present disclosure (3D tomography).
FIG. 3 is a cross-sectional view schematically showing a membrane-electrode assembly according to the present disclosure.
FIG. 4 is a schematic diagram showing the overall configuration of a fuel cell according to one embodiment of the present disclosure.
FIG. 5 shows size distributions of metal catalyst particles inside and outside pores prepared according to Comparative Example 2 (FIG. 5(A)) and Example (FIG. 5(B)) of the present disclosure.
FIG. 6 shows performance evaluation results of catalysts prepared using a support with a specific surface area of 300 m²/g or more according to Example and Comparative Examples of the present disclosure.
FIG. 7 shows performance evaluation results of catalysts prepared using a support with a specific surface area of less than 300 m²/g according to Example and Comparative Example of the present disclosure.

### [BEST MODE FOR CARRYING OUT THE INVENTION]

Hereinafter, each configuration of the present disclosure will be described in more detail so that those skilled in the art to which the present disclosure pertains can easily implement the present disclosure, but this is only one example, and the scope of rights of the present disclosure is not limited by the following contents.

"Preferred" or "preferably" used in the present disclosure refers to one embodiment of the present disclosure that has certain advantages under certain conditions. However, other embodiments may also be preferred under the same or different conditions. Additionally, one or more preferred embodiments do not mean that other embodiments are not useful, and do not exclude other embodiments that are within the scope of the present disclosure.

The term "comprising" used in this specification is used to list materials, compositions, devices, and methods useful in the present disclosure and is not limited to the listed examples thereof.

The present disclosure relates to a fuel cell catalyst including a support having pores, first metal catalyst particles located inside the pores of the support, and second metal catalyst particles located outside the pores of the support.

The support can be used as long as it can be used as a support in the fuel cell catalyst technical field, and it may be, for example, a carbon-based support, a porous inorganic oxide support such as zirconia, alumina, titania, silica, and ceria, or a zeolite support.

Preferably, a carbon-based support with excellent electrical conductivity can be used, and the carbon-based support may be selected from graphite, super P, carbon fiber, carbon sheet, carbon black, Ketjen Black, Denka black, acetylene black, carbon nanotube (CNT), carbon sphere, carbon ribbon, fullerene, active carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, and combinations of two or more thereof.

Specifically, the support is formed so that the ratio (M1/M2) of the number of the first metal catalyst particles (M1) and the number of the second metal catalyst particles (M2) configures differently the content of the first catalyst particles supported in the inside of the pores of the support according to the specific surface area of the support. The support is formed by adjusting the ratio to 0.25 to 0.67 when using a support with a specific surface area of 300 m²/g or more, and adjusting the ratio to 0.05 to 0.25 when using a support with a specific surface area of less than 300 m²/g. There is an effect of improving the performance of the fuel cell and the durability of the catalyst to improve the lifespan of the battery by supporting metal catalyst particles in the inside and outside of the support, respectively, and limiting the ratio thereof.

In the present disclosure, the content of the first catalyst particles supported in the inside of the pores is varied depending on the specific surface area of the support in order to maximize the activity and durability effects of the metal catalyst particles according to the shape of the support. When the specific surface area of the support is 300 m²/g or more, if it is contained in an amount less than the above content, there may be a problem in that durability is reduced, and if it is contained in an excessive amount compared to the above content, there may be a problem in that performance is deteriorated. In addition, when the specific surface area of the support is less than 300 m²/g, if it is contained in an amount less than the above content, there may be a problem in that durability is reduced, and if it is contained in an excessive amount compared to the above content, there may be a problem in that performance is deteriorated.

Additionally, in the fuel cell catalyst according to the present disclosure, the first metal catalyst particles and the second metal catalyst particles may have an average diameter ratio of 1:1 to 3.

Preferably, they may have a ratio of 1:1.1 to 2.5, and more preferably, they may have a ratio of 1:1.2 to 2.

If the average diameter of the second metal catalyst particles is larger than the above ratio, there may be a problem in that fuel cell performance deteriorates.

At this time, the first metal catalyst particles and the second metal catalyst particles may each independently have a diameter of each particle of 2 to 17 nm (nanometers), and it is characterized in that the size of the second metal catalyst particles is larger than that of the first metal catalyst particles in consideration of the above-described average diameter ratio.

In particular, in the fuel cell catalyst according to the present disclosure, the support may have a size (diameter) of 15 to 60 nm (nanometers), and may have a pore size of 2 to 15 nm (nanometers).

The support pores may have a size (diameter) of preferably 2 to 13 nm, and most preferably 2 to 10 nm.

If the pores are smaller than the above size, there may be a problem in that there are no metal catalyst particles located inside the pores, and if the pores are larger than the above size, there may be a problem in that the ratio of the metal catalyst particles inside and outside the pores is difficult.

Meanwhile, as the first metal catalyst particles are supported in the inside of the support pores, it is preferable to have a ratio of the size of the first metal catalyst particles to the diameter of the support pores of 0.8 to 1.1.

The present disclosure is characterized in that the durability is improved without deteriorating the performance of the catalyst by specifying the content ratio according to the size and position of the metal catalyst particles supported on the support used in the existing fuel cell catalyst.

In a point that it has the effect of improving performance and durability by specifying the size and content ratio of the metal catalyst particles and the location of the inside, outside, etc. of the pores without a significant difference from the components of existing fuel cell catalysts, there is no significant difference in the preparation cost, and it has the advantage that it can be prepared using existing manufacturing equipment. The first metal catalyst particles and the second metal catalyst particles may each independently be platinum or a platinum-based alloy, specifically, Pt-Pd, Pt-Mn, Pt-Sn, Pt-Mo, Pt-Cr, Pt-W, Pt-Ru, Pt-Ni, Pt-Co, Pt-Y, Pt-Ru-W, Pt-Ru-Ir, Pt-Ru-Ni, Pt-Ru-Mo, Pt-Ru-Rh-Ni, Pt-Ru-Sn-W, Pt-Ru-Ir-Ni, Pt-Ru-Ir-Y, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, or Pt-Cr-Ir.

The first metal catalyst particles and the second metal catalyst particles are not necessarily the same, and may be different, and may be composed of a single type of catalyst, or may each be formed in the form containing several types of metal catalyst particles.

Meanwhile, the fuel cell catalyst according to the present disclosure is prepared by the following method.

A fuel cell catalyst according to the present disclosure in which the first metal catalyst particles and the second metal catalyst particles are supported in the inside and outside of the support pores can be prepared by sequentially performing steps of a) forming a seed of metal catalyst particles from a metal catalyst precursor solution, b) adding a support to the solution, and then infiltrating the seed of the metal catalyst particles into the pores in the support and adsorbing it on the support surface, c) reducing and growing the seed of the metal catalyst particles in the step b).

Specifically, the method of forming the seed of metal catalyst particles in the step a) is to make a metal catalyst precursor in the metal catalyst precursor solution into a seed in the form of metal ligands that are partially reduced or hydrated under mild conditions. As additives used to form the seed, weak reducing agents such as formaldehyde, formic acid, citric acid, and ascorbic acid may be used in a diluted form, and urea and hexamethylenetetramine may be used. More specifically, the step a) may be performed by mixing at least one additive selected from the group consisting of formaldehyde, formic acid, citric acid, ascorbic acid, urea, and hexamethylenetetramine with a metal catalyst precursor to prepare a metal catalyst precursor solution and heating the prepared metal catalyst precursor solution.

Specifically, when using urea or hexamethylenetetramine, heating may be performed at a temperature condition of 80 to 110°C for 0.5 to 3 hours.

If heating is performed at a temperature lower than the above temperature, there may be a problem in that the metal catalyst particle seed is not formed, and if heating is performed at a temperature higher than the above temperature, there may be a problem in that the metal catalyst particle seed is reduced to enlarge the metal catalyst particles.

If heating is performed for a shorter time than the above time, there is a problem in that the metal catalyst particle seed is not formed, and if heating is performed for a longer time than the above time, there may be a problem in that the seed of the metal catalyst particles is reduced to enlarge the metal catalyst particles.

Specifically, the step b) may be performed using (i) vacuum infiltration, may be performed using (ii) a solvent with good wettability, or may be performed by (iii) separately hydrophilically-pretreating the pores of the support prior to the step b) to use the separately hydrophilically-pretreated pores of the support.

In particular, the step b) is a process for facilitating the infiltration of the metal catalyst particle seed into the support pores, and may form first and second metal catalyst particles by causing an additional reduction reaction in the subsequent step c) in a state the metal catalyst particle seed is infiltrated into the mesopores (excluding micropores within 2 nm) using a vacuum infiltration method.

Specifically, when using the vacuum infiltration method, the step b) may be performed at pressure conditions of 0.01 to 90 kPa for 5 to 30 minutes.

If the step b) is performed at a pressure lower than the above pressure, there may be a problem in that the performance is reduced due to an increase in metal catalyst particles located inside the support pores, and if the step b) is performed at a pressure higher than the above pressure, there may be a problem in that the number of metal catalyst particles located inside the support pores decreases.

If the step b) is performed for a shorter time than the above time, there is a problem in that the effect of infiltrating the metal catalyst particle seed into the pores using the actual vacuum infiltration method is insignificant, and if the step b) is performed for a longer time than the above time, there is a problem in that the performance decreases due to an increase in the number of metal catalyst particles located inside the support pores.

Alternatively, the step (b) may also improve the infiltration power of the metal catalyst precursor solution by (ii) using a solvent with good wettability or (iii) separately hydrophilically modifying the support pore surface instead of (i) using a vacuum penetration method.

As the metal catalyst precursor solution contains a hydrophilic solvent such as an alcohol-based solvent, etc., the infiltration power of the solution is improved, and thus, it may be easy to prepare the first metal catalyst particles through infiltration of the metal catalyst particle seed. The alcohol-based solvent may include alcohols having 1 to 6 carbon atoms. Specifically, it may include one or more alcohols including chain alcohols, branched alcohols, and the like having 2 to 4 carbon atoms. The hydrophilic solvent of the metal catalyst precursor solution may include, for example, one or more selected from the group consisting of isopropyl alcohol, ethanol, butyl alcohol, n-propyl alcohol, acetone, and formic acid.

When a treatment method hydrophilically modifies the inner surface of the support pores, it is possible to treat the surface in a variety of ways without particular limitation as long as the treatment method allows the surface to have hydrophilicity. The treatment method may include, for example, methods such as surface plasma treatment, hydrophilic functional group modification treatment, etc. Specifically, it may include a method of performing surface modification with a hydrophilic functional group, and in this case, there is an advantage capable of modifying even the deep inner surface of the pores by immersing the support in a reactive solution for hydrophilic modification.

The hydrophilic functional group can be used without particular limitation as long as it is a hydrophilic functional group such as a hydroxyl group, a carboxylic acid group, an amine group, a sulfonic acid group, or the like.

In addition, the hydrophilic functional group may not only correspond to a case modified with one type of hydrophilic functional group, but also correspond to a case modified with a different type of hydrophilic functional group.

In this way, a metal catalyst precursor solution containing an alcohol-based solvent is immersed in a support whose pore inner surface has been modified with a hydrophilic functional group, and a reduction reaction is performed in a state in which the infiltration rate of the solution into the support pores has been improved, thereby allowing first metal catalyst particles to be formed inside the pores.

The reducing step of the step c) may be performed by additionally adding a reducing agent in the step c) in a state in which the seed of the metal catalyst particles has infiltrated into the pores of the support in the step b).

The reducing agent may include one or more selected from the group consisting of formaldehyde, formic acid, citric acid, ascorbic acid, hexamethylenetetramine, and ethylene glycol, which are weak reducing agents used in the formation of the metal catalyst particle seed, and preferably it may include hexamethylenetetramine or ethylene glycol.

The reducing agent may be added at an equivalent ratio of 10 to 200 per mole of the metal catalyst precursor.

When added at a ratio lower than the above equivalence ratio, there is a problem in that the metal catalyst precursor is not sufficiently reduced to lower the content of metal catalyst particles and deteriorate the performance and durability, and when added at a ratio higher than the above equivalent ratio, there is a problem in that there is no significant difference in the physical properties of the prepared catalyst compared to the addition amount so that it is preferable to add it at the equivalent ratio or less from the viewpoint of preparation efficiency.

The metal catalyst precursor of the fuel cell catalyst according to the present disclosure is not particularly limited as long as it can be formed into first metal catalyst particles and second metal catalyst particles through a reduction reaction, and any metal catalyst precursor can be used as long as it is commonly used in the fuel cell catalyst technical field. It may be, for example, a salt of platinum or a platinum-based alloy that may be the above-described first metal catalyst particles and second metal catalyst particles.

The fuel cell catalyst of the present disclosure is prepared from a catalyst slurry prepared by mixing an ionomer and a dispersion medium that is used in an ion conductor dispersion, and the prepared catalyst slurry can be used to form an anode and/or a cathode of a membrane electrode assembly.

The membrane electrode assembly of the present disclosure may be manufactured by forming a catalyst layer on the surface of the release film with the catalyst slurry and then applying heat and pressure in a state in which the catalyst layer is in contact with the polymer electrolyte membrane to transfer the catalyst layer onto the polymer electrolyte membrane, or coating the catalyst slurry directly on the polymer electrolyte membrane to form an electrode.

The membrane electrode assembly includes an anode, a cathode, and a polymer electrolyte membrane between them, and at least one of the anode and the cathode includes the fuel cell catalyst of the present disclosure.

The ionomer, which is mixed with the fuel cell catalyst to form a catalyst slurry, is used to transfer hydrogen ions and can also function as a binder for improving adhesion between the electrodes and the polymer electrolyte membrane. The ionomer may be a cationic conductor having at least one proton exchange group selected from the group consisting of a sulfonic acid group, a carboxyl group, a boronic acid group, a phosphoric acid group, an imide group, a sulfonimide group, a sulfonamide group, a sulfonic acid fluoride group, and combinations thereof.

Specifically, the ionomer according to one embodiment of the present disclosure may be a fluorine-based cation conductor having a sulfonic acid group and/or a carboxyl group, a hydrocarbon-based cation conductor having a sulfonic acid group and/or a carboxyl group, or a mixture thereof.

It is preferable to adjust the content of the catalyst in the catalyst slurry so that the weight of the catalyst is 20 to 80% by weight based on the total weight of the electrode. If the content of the catalyst in the electrode is less than 20% by weight, the catalytic activity required for the electrode may not be satisfied. On the other hand, if the content of the catalyst in the electrode exceeds 80% by weight, the catalyst activity may be rather reduced since the active area of the catalyst decreases while agglomeration of the catalysts is being caused.

Hereinafter, the present disclosure will be described in more detail with reference to the drawings.

However, this is only an example for understanding the present disclosure, and the scope of rights of the present disclosure is not limited thereby.

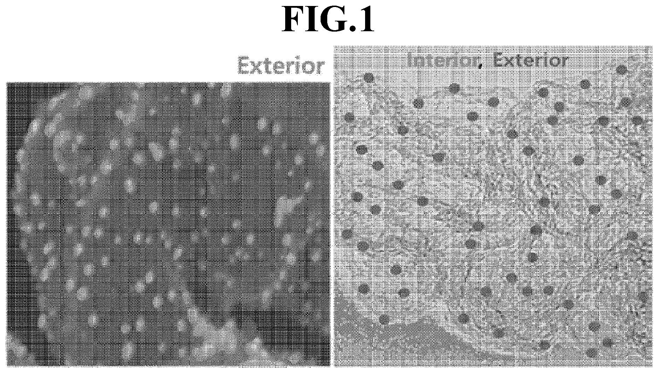

FIG. 1 is an edited image of a STEM image of an electrode catalyst for a fuel cell according to one embodiment of the present disclosure, and an edited image of a TEM image of an electrode catalyst for a fuel cell according to another embodiment of the present disclosure. In the case of the STEM image, it is an image emphasizing the second metal catalyst particles, and in the case of TEM, the first metal catalyst particles and the second metal catalyst particles are divided.

Referring to FIG. 1, metal catalyst particles are present inside and outside the support, respectively, and as described above, the first metal catalyst particles located inside the support pores and the second metal catalyst particles located outside the pores satisfy the content ratio and size ratio, thereby having the effect of improving both performance and durability.

In particular, FIG. 1 is a case where the support has a specific surface area of 300 m²/g or more, and as the support has a large specific surface area, it has a high first metal catalyst particle content compared to the case where the support has a specific surface area of less than 300 m²/g.

It may have the enhanced effect of performance and durability by adjusting the content of the catalyst depending on the specific surface area range of the support.

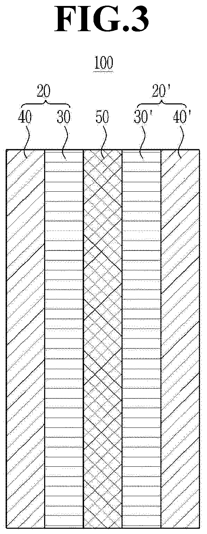

FIG. 3 is a cross-sectional view schematically showing a membrane-electrode assembly according to the present disclosure. When it is described with reference to FIG. 3, the membrane-electrode assembly 100 includes the polymer electrolyte membrane 50 and electrodes 20 and 20' disposed on both surfaces of the polymer electrolyte membrane 50, respectively. The electrodes 20, 20' include electrode substrates 40 and 40' and catalyst layers 30 and 30' formed on the surfaces of the electrode substrates 40 and 40', and may further include a microporous layer (not shown) containing conductive fine particles such as carbon powder, carbon black, and the like in order to facilitate diffusion of materials from the electrode substrates 40 and 40' between the electrode substrates 40 and 40' and the catalyst layers 30 and 30'.

In the membrane-electrode assembly 100, an electrode 20, which is disposed on one surface of the ion exchange membrane 50 to cause an oxidation reaction that generates hydrogen ions and electrons from fuel transferred to the catalyst layer 30 through the electrode substrate 40, is called an anode electrode, and an electrode 20', which is disposed on the other surface of the ion exchange membrane 50 to cause a reduction reaction that generates water from the hydrogen ions supplied through the ion exchange membrane 50 and the oxidizing agent transferred to the catalyst layer 30' through the electrode substrate 40', is called a cathode electrode.

A porous conductive substrate may be used as the electrode substrates 40 and 40' so that supply of hydrogen or oxygen is smoothly achieved. Typical examples thereof may include carbon paper, carbon cloth, carbon felt, or metal cloth (refers to a porous film made of metal cloth in a fiber state or one in which a metal film is formed on the surface of a cloth formed of polymer fibers), but are not limited thereto. In addition, it is preferable to use the electrode substrates 40 and 40' that are water repellent treated with a fluorine-based resin to prevent reactant diffusion efficiency from being reduced by water generated during operation of the fuel cell.

The fluorine-based resin may include polytetrafluoroethylene, polyvinylidene fluoride, polyhexafluoropropylene, polyperfluoroalkyl vinyl ether, polyperfluorosulfonylfluoride alkoxyvinyl ether, fluorinated ethylene propylene, polychlorotrifluoroethylene, or copolymers thereof.

The fuel cell according to one embodiment of the present disclosure includes the membrane-electrode assembly and may be, for example, a fuel cell using hydrogen gas as fuel.

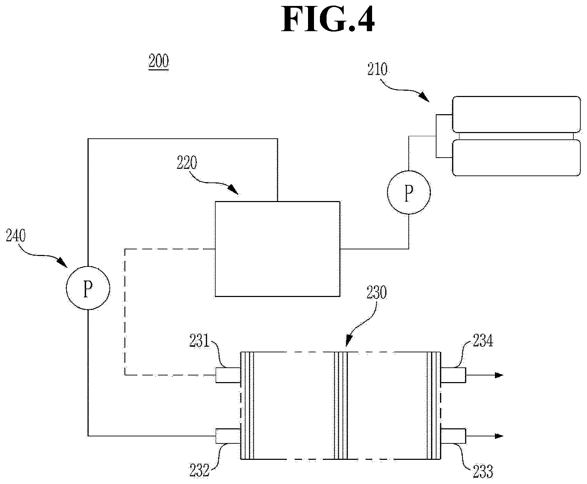

FIG. 4 is a schematic diagram showing the overall configuration of a fuel cell according to one embodiment of the present disclosure.

Referring to FIG. 4, the fuel cell 200 includes a fuel supply unit 210 that supplies a mixed fuel in which fuel and water are mixed, a reforming unit 220 that reforms the mixed fuel to generate a reformed gas containing hydrogen gas, a stack 230 in which the reformed gas containing hydrogen gas supplied from the reforming unit 220 causes an electrochemical reaction with an oxidizing agent to generate electrical energy, and an oxidizing agent supply unit 240 supplying the oxidizing agent to the reforming unit 220 and the stack 230.

The stack 230 is provided with a plurality of unit cells that generate electrical energy by inducing an oxidation/reduction reaction between the reformed gas containing hydrogen gas supplied from the reforming unit 220 and the oxidizing agent supplied from the oxidizing agent supply unit 240.

Each of the unit cells refers to a unit cell that generates electricity, and includes a membrane-electrode assembly that oxidizes/reduces oxygen in the hydrogen gas-containing reformed gas and the oxidizing agent, and separators (or called bipolar plates, hereinafter referred to as 'separators') for supplying the hydrogen gas-containing reformed gas and the oxidizing agent to the membrane-electrode assembly. The separators are disposed on both sides thereof in a state in which the membrane-electrode assembly is placed at the center. At this time, the separators located on the outermost sides of the stack may be particularly called end plates.

Among the separators, the end plate is provided with a pipe-shaped first supply pipe 231 for injecting reformed gas containing hydrogen gas supplied from the reforming unit 220, and a pipe-shaped second supply pipe 232 for injecting oxygen gas, and the other end plate is provided with a first discharge pipe 233 for discharging to the outside the reformed gas containing the hydrogen gas that is ultimately unreacted and remaining in the plurality of unit cells, and a second discharge pipe 234 for discharging to the outside the oxidizing agent that is ultimately unreacted and remaining in the above-described unit cells.

### [MODE FOR CARRYING OUT THE INVENTION]

Hereinafter, the present disclosure will be described in more detail based on Examples of the present disclosure, but this is only an exemplary description for understanding the present disclosure, and the scope of rights of the present disclosure is not limited or restricted to the following Examples.

### [Example 1]

1 g of H₂PtCl₆ is added to a solution in which 1 g of urea is dissolved in water, and it is heated while performing reflux at 100°C for 2 hours to form a Pt catalyst particle seed.

0.47 g of Vulcan (a surface area of 320 m²/g) carbon is placed in the above solution and dispersed uniformly.

The solution is placed in a simple vacuum adsorption device and treated at a vacuum state of 10 kPa for 20 minutes to adsorb the Pt catalyst particle seed into the pores of a carbon support.

A reducing agent such as ethylene glycol or hexamethylenetetramine is added to the vacuum adsorption-treated solution at an equivalent ratio of 50 to further reduce the solution so that a catalyst is prepared through filtering and drying.

### [Example 2]

The process is the same except that acetylene black with a surface area of 120 m²/g was used instead of Vulcan carbon with a surface area of 320 m²/g used in Example 1 above.

### [Comparative Example 1]

A catalyst was prepared by dispersing H₂PtCl₆ as a catalyst precursor and Vulcan carbon as a support in a solvent and reducing it with NaBH₄ using a conventional catalyst preparation method.

### [Comparative Example 2]

After Vulcan carbon as the support was pretreated with distilled water through a pretreatment method, H₂PtCl₆ as the catalyst precursor was placed therein, additional vacuum treatment (10 kPa, 60 minutes) was performed, and then the catalyst was prepared through reduction.

### [Comparative Example 3]

A catalyst was prepared by performing the process in the same manner as in Comparative Example 1 except that acetylene black with a surface area of 120 m²/g was used instead of the Vulcan carbon in Comparative Example 1 above using a conventional catalyst preparation method.

### [Manufacturing Example]

Membrane-electrode assemblies were all manufactured in the same manner except that the catalysts prepared in the above Examples and Comparative Examples were used, respectively.

### [Evaluation Example 1] Measurement of particle size and distribution through STEM and TEM analyses

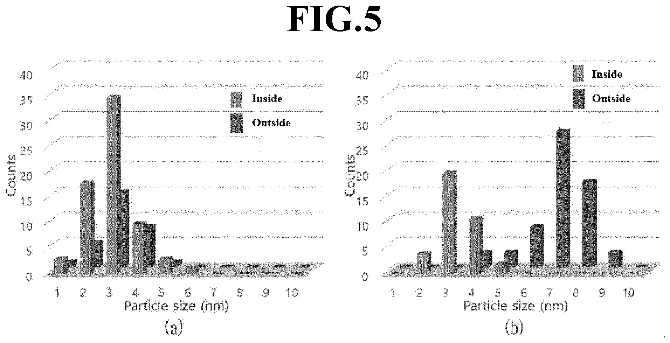

STEM and TEM analyses were performed to find out particle sizes and size distributions of the catalysts prepared in Comparative Example 2 and Example 1, and the results are shown in FIGS. 5(A) and 5(B), respectively. It can be seen from FIGS. 5(A) and 5(B) that there is no difference in the sizes of the catalyst particles distributed inside and outside the pores in the catalyst of the Comparative Example (FIG. 5(A)), whereas catalyst particles with different sizes are distributed inside and outside the pores in the catalyst prepared according to the preparation method of the present disclosure (FIG. 5(B)).

Further, in addition to Comparative Example 2 and Example 1 above, the number ratios, average sizes, etc. of the catalysts prepared in Example 2 and Comparative Examples 1 and 3 were measured and shown in [Table 1] and [Table 2] below.

**[Table 1]**

| - Result of manufacturing using a support with a specific surface area of 300 m²/g or more | | | | | |
|---|---|---|---|---|---|
| Sample | Metal catalyst particles inside pores | | Metal catalyst particles outside pores | | Ratio (M1/M2) |
| | Ratio (%, M1) | Average size (nm) | Ratio (%, M2) | Average size (nm) | |
| Comparative Example 1 | 15 | 2.7 | 85 | 2.7 | 0.176 |
| Comparative Example 2 | 70 | 2.9 | 30 | 3.1 | 2.333 |
| Example 1 | 37 | 4.3 | 63 | 7.1 | 0.587 |

**[Table 2]**

| - Result of manufacturing using a support with a specific surface area of less than 300 m²/g | | | | | |
|---|---|---|---|---|---|
| Sample | Metal catalyst particles inside pores | | Metal catalyst particles outside pores | | Ratio (M1/M2) |
| | Ratio (%, M1) | Average size (nm) | Ratio (%, M2) | Average size (nm) | |
| Comparative Example 3 | 1 | 3.0 | 99 | 3.0 | 0.010 |
| Example 2 | 15 | 4.5 | 85 | 7.5 | 0.176 |

It can be seen from [Table 1] and [Table 2] that the catalysts of Examples 1 and 2 according to the present disclosure satisfy the M1/M2 ratio range of the present disclosure.

### [Evaluation Example 2] Battery performance evaluation: 80°C, 50RH condition evaluation results

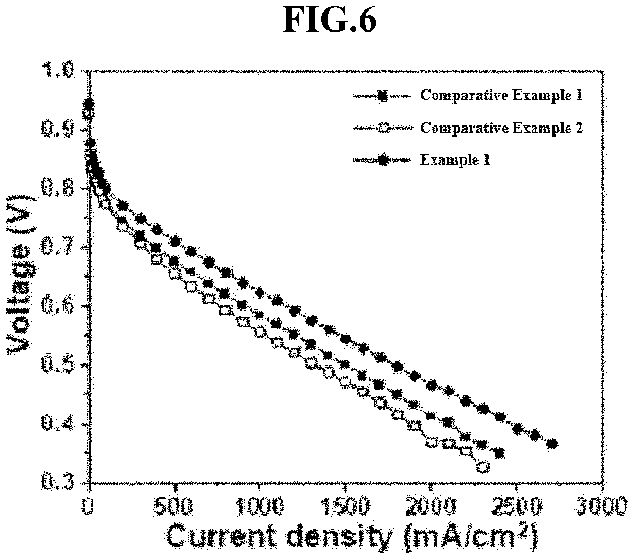

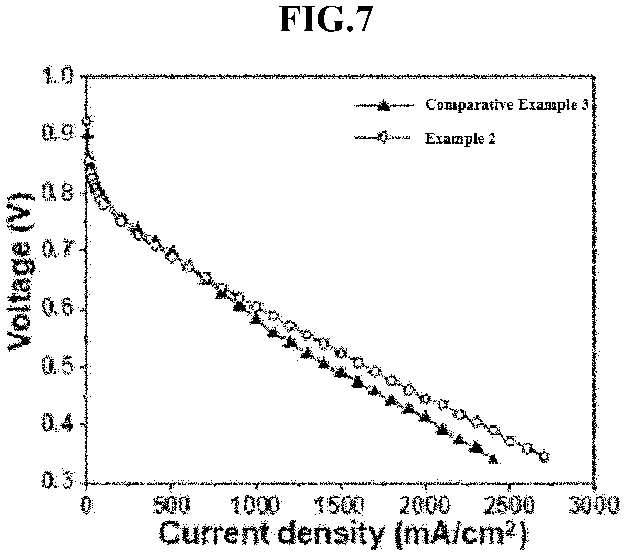

Fuel cells were manufactured using the catalysts of Comparative Examples and Example shown in [Table 1] above (catalysts prepared using a support with a specific surface area of 300 m²/g or more), the cell performances were evaluated, and then the results are shown in FIG. 6. In addition, fuel cells were manufactured using the catalysts of Comparative Example and Example shown in [Table 2] above (catalysts prepared using a support with a specific surface area of less than 300 m²/g), the cell performances were evaluated, and then the results are shown in FIG. 7. It can be seen from FIGS. 6 and 7 that the catalysts of the Examples according to the present disclosure exhibit higher current densities at the same voltage compared to the catalysts of the Comparative Examples.

### [Evaluation Example 3] Catalyst durability evaluation

A DOE catalyst durability evaluation experiment was conducted on the catalysts of Comparative Example 1, Comparative Example 2, and Example 1 above (catalysts prepared using a support with a specific surface area of 300 m²/g or more) and the catalysts of Comparative Example 3 and Example 2 (the catalyst prepared using a support with a specific surface area of less than 300 m²/g), and the results are shown in [Table 3].

**[Table 3]**

| - Catalyst durability evaluation results (voltage loss after DOE 10,000 cycles) | | | | | |
|---|---|---|---|---|---|
| Sample | Comparative Example 1 | Comparative Example 2 | Example 1 | Comparative Example 3 | Example 2 |
| Voltage loss | 35 mV | 15 mV | 14 mV | 40 mV | 22 mV |

It can be seen from [Table 3] that the catalysts of Comparative Examples 1 and 3 prepared by a conventional method showed larger voltage losses after DOE 10,000 cycles than the catalysts of the Examples according to the present disclosure.

Meanwhile, Comparative Example 2 is a catalyst having 80% or more of the metal catalyst particles supported in the pores thereof, and it is confirmed from the previous Evaluation Example 2 that it has poor performance. On the other hand, although the catalysts of the Examples had its activities increased by optimizing them, the voltage losses are similar to that of Comparative Example 2 as shown in [Table 3] below. This means that the catalysts of the Examples show higher performances than that of the catalyst of Comparative Example 2 and catalyst durabilities equal to or higher than that of the catalyst of Comparative Example 2.

## Claims

1. A fuel cell catalyst comprising:
a support having pores;
first metal catalyst particles located inside the pores of the support; and
second metal catalyst particles located outside the pores of the support.

2. The fuel cell catalyst of claim 1, wherein the fuel cell catalyst has a ratio (M1/M2) of the number of first metal catalyst particles (M1) and the number of second metal catalyst particles (M2) of a ratio of 0.25 to 0.67 if the support has a specific surface area of 300 m²/g or more, and a ratio of 0.05 to 0.25 if the support has a specific surface area of less than 300 m2/g.

3. The fuel cell catalyst of claim 1, wherein the first metal catalyst particles and the second metal catalyst particles are contained at a diameter ratio of 1:1 to 3.

4. The fuel cell catalyst of claim 1, wherein the first metal catalyst particles and the second metal catalyst particles each independently have an average diameter of 2 to 17 nm.

5. The fuel cell catalyst of claim 1, wherein the support has a size of 15 to 60 nm.

6. The fuel cell catalyst of claim 1, wherein the support pores have a size of 2 to 15 nm.

7. The fuel cell catalyst of claim 1, wherein the first metal catalyst particles and the second metal catalyst particles are each independently one or more selected from the group consisting of Pt, Pt-Pd, Pt-Mn, Pt-Sn, Pt-Mo, Pt-Cr, Pt-W, Pt-Ru, Pt-Ni, Pt-Co, Pt-Y, Pt-Ru-W, Pt-Ru-Ir, Pt-Ru-Ni, Pt-Ru-Mo, Pt-Ru-Rh-Ni, Pt-Ru-Sn-W, Pt-Ru-Ir-Ni, Pt-Ru-Ir-Y, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, and Pt-Cr-Ir.

8. A method for preparing the fuel cell catalyst according to claim 1, comprising steps of
a) forming a seed of metal catalyst particles from a metal catalyst precursor solution,
b) adding a support to the solution, and then infiltrating the seed of the metal catalyst particles into the pores in the support and adsorbing it on the support surface, and c) reducing and growing the seed of the metal catalyst particles in the step b).

9. The method of claim 8, wherein the step a) is making a seed in the form of a partially reduced or hydrated metal ligand from a metal catalyst precursor solution.

10. The method of claim 8, wherein the step a) is performed by mixing at least one additive selected from the group consisting of formaldehyde, formic acid, citric acid, ascorbic acid, urea, and hexamethylenetetramine with a metal catalyst precursor to prepare a metal catalyst precursor solution and heating it.

11. The method of claim 8, wherein the step b) is performed using vacuum infiltration.

12. The method of claim 8, wherein in the step b), the metal catalyst precursor solution contains an alcohol-based solvent, and the support is a pretreated one in which the inside of the pores is hydrophilically modified before performing the step b).

13. The method of claim 8, wherein the step c) is performed by adding a reducing agent, and the reducing agent includes one or more selected from the group consisting of formaldehyde, formic acid, ascorbic acid, hexamethylenetetramine, citric acid, and ethylene glycol.

14. A membrane-electrode assembly comprising the fuel cell catalyst according to claim 1.

15. A fuel cell comprising the membrane-electrode assembly according to claim 14.
